# EUROPÄISCHE PATENTANMELDUNG

(11) **EP 4 660 162 A1**
(43) Veröffentlichungstag der Anmeldung: **10.12.2025**
(21) Anmeldenummer: 24180450.9
(22) Anmeldetag: 06.06.2024
(51) Int. Cl.: C03B 37/012

(54) **VERFAHREN FÜR DIE HERSTELLUNG EINER VORFORM FÜR EINE HOHLKERNFASER**

(71) Anmelder: Heraeus Quarzglas GmbH & Co. KG, 63450 Hanau (DE)
(72) Erfinder: Rosenberger, Manuel, 63450 Hanau (DE); Müller, Andreas, 63450 Hanau (DE); Spielmann, Timo, 63450 Hanau (DE); Schuster, Kay, 63450 Hanau (DE); Plass, Jaqueline, 63450 Hanau (DE); Werner, Jörg, 63450 Hanau (DE)
(74) Vertreter: Heraeus IP

(57) **Zusammenfassung**

Bekannte Verfahren zur Herstellung einer Vorform für eine antiresonante Hohlkernfaser, die einen sich entlang einer Faser-Längsachse erstreckenden Hohlkern und einen den Hohlkern umgebenden und von Hohlkanälen durchzogenen Mantel aufweist, umfassen mindestens einen thermischen Streckprozess, bei dem ein Vorprodukt, das Antiresonante Vorformlinge (ARE-Vorformlinge) enthält, zu der Vorform elongiert wird. Um dabei unbeabsichtigte Deformationen und Veränderungen der Querschnittsstruktur, insbesondere Positionsveränderungen von ARE-Vorformlingen zu vermeiden, wird vorgeschlagen, dass ein erstes zylinderförmiges Vorprodukts VP1 mit einem ersten Außendurchmesser OD1 mittels eines ersten Ausziehverhältnisses AV1, das kleiner ist als 1,4 zu einem zweiten zylinderförmigen Vorprodukt VP2 mit einem zweiten Außendurchmesser OD2, und dieses mittels einem zweiten Ausziehverhältnis AV2 zu der Vorform oder zu einem dritten zylinderförmigen Vorprodukts VP3 mit einem dritten Außendurchmesser OD3 thermisch gestreckt wird.

## Beschreibung

### Technischer Hintergrund

Die Erfindung liegt auf dem Gebiet der optischen Fasertechnologie und dabei insbesondere im Bereich der antiresonanten Hohlkernfasern (englisch: "antiresonant hollow-core fibers"- kurz: AR-HCF). Der hohle Kernbereich ist von einem mikrostrukturierten Mantel umgeben, in dem sogenannte "antiresonante Elemente" (oder "Antiresonanzelemente"; kurz: "AREs") angeordnet sind. Diese bilden in der Regel Hohlkanäle, die durch Glasmembranen voneinander getrennt sind. Die um den Hohlkern angeordneten Glasmembranen können das auftreffende Licht reflektieren und dadurch durch den Faserkern leiten. Hohlkernfasern ermöglichen daher die Lichtführung in einem "hohlen" Kern, der entweder evakuiert oder mit einem Gas (zum Beispiel Luft) gefüllt ist.

Diese Fasertechnologie verspricht eine niedrige optische Dämpfung, ein sehr breites Transmissionsspektrum (auch im UV- oder IR-Wellenlängenbereich) und eine geringe Latenzzeit bei der Datenübertragung. Darüber hinaus eignen sich diese Fasern für spektroskopische Anwendungen sowie zur Übertragung von kurzen Laserpulsen zur Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Insbesondere betrifft die Erfindung ein Verfahren zur Herstellung einer Vorform für eine antiresonante Hohlkernfaser, die einen sich entlang einer Faser-Längsachse erstreckenden Hohlkern und einen den Hohlkern umgebenden mikrostrukturierten Mantelbereich aufweist.

### Stand der Technik

Es ist bekannt, antiresonante Hohlkernfasern aus Vorformen zu ziehen, die einen hohlen Kern haben, der von einem Mantel umgeben ist, in dem mindestens einige der AREs als eine von Hohlkanälen durchzogene Querschnittsstruktur angelegt sind. Die Vorform wird beispielsweise durch Kollabieren und/oder Elongieren eines zylinderförmigen Vorprodukts erzeugt, das dabei mit zusätzlichem Mantelmaterial überfangen werden kann. Das zylinderförmige Vorprodukt ist beispielsweise ein Ensemble, das sich aus einem Hüllrohr und einer Vielzahl zylinderförmiger Ausgangskomponenten zusammensetzt, oder es ist ein massiver Hohlzylinder, der den Hohlkern und den von Hohlkanälen durchzogenen Mantel umfasst, und der im Folgenden auch als "Kernvorform" (engl.: cane) bezeichnet wird. Die Kernvorform kann durch Kollabieren und/oder Elongieren zylinderförmiger Ausgangskomponenten in einem Hüllrohr erhalten werden, wobei auch bereits in diesem Verfahrensschritt durch Überfangen mit einem Überfangzylinder zusätzliches Mantelmaterial aufkollabiert werden kann. Ausgangskomponenten des Vorprodukts, die in der Vorform die von Hohlkanälen durchzogene Querschnittsstruktur und in der fertigen Hohlkernfaser die AREs bilden, werden im Folgenden auch als "ARE-Vorformlinge" bezeichnet.

Ein Vorprodukt für eine Hohlkernfaser mit dem sogenannten NANF-Design (englisch: Nested Antiresonant Nodeless Hollow Core Fibers) enthält verschachtelte, ARE-Vorformlinge, im einfachsten Fall jeweils bestehend aus einem Außenrohr (im Folgenden auch "Primärrohr" genannt) und einem Innenrohr (im Folgenden auch "Sekundärrohr" genannt), das an der Innenseite des Primärrohres angeordnet ist.

Bei einem als DNANF-Design (englisch: Double Nested Antiresonant Nodeless Hollow Core Fibers) ist im Sekundärrohr jeweils ein weiteres Innenrohr angeordnet, das auch als "Tertiärrohr" bezeichnet werden kann. Die Sekundär- und Tertiärrohre bilden in der Hohlkernfaser zusätzliche Hohlkanäle, die zu einer Verringerung der optischen Faserdämpfung beitragen, indem sie zu mehrfachen radialen Reflexionen führen und Übergänge oder Knotenpunkte vermeiden, die zu Resonanzen führen.

Beim sogenannten "ALIF-Design" (englisch: "Antiresonant Leakage Inhibited Fibers") ist an der Innenseite des Primärrohres ein Paar von Sekundärrohren eingesetzt, die voneinander beabstandet sind und an azimutalen Stellen um den Umfang des Primärrohes befestigt sind, die beide zum peripheren Kontaktpunkt des Primärrohres am Hüllrohr versetzt sind. Zwischen jedem Sekundärrohr-Paar ist somit ein in radialer Richtung offener Spalt vorhanden.

Polarisationserhaltende Hohlkernfasern enthalten AREs, bei denen die Anordnung der Primärrohre und Sekundärrohre beziehungsweise der daraus erzeugten Hohlkanäle eine Asymmetrie aufweist, die zu einer bevorzugten Leitung von Licht einer Polarisation bewirkt.

Aus der EP 3 766 849 A1 ist ein Verfahren zur Herstellung einer Kernvorform für antiresonante Hohlkernfasern bekannt, die durch thermisches Strecken eines Vorprodukts erzeugt wird, das als Ensemble aus einem Hüllrohr und einer Vielzahl von ARE-Vorformlingen vorliegt. Dabei wird einerseits vorgeschlagen, ein großes Ausziehverhältnis einzustellen, um absolute Geometriefehler zu verringern. Andererseits geht ein großes Ausziehverhältnis mit entsprechend großen Umformprozesse und Materialbewegungen einher, was leicht zu unerwünschten Deformationen bei den filigranen Strukturelementen der Antiresonanzelement-Vorformlinge führen kann. Das Ausziehverhältnis beim thermischen Strecken des Vorprodukts wird daher bevorzugt auf einen Wert im Bereich von 1,05 bis 10 eingestellt, besonders bevorzugt auf einen Wert im Bereich von 1,05 bis 5. Das Vorprodukt kann beim thermischen Strecken mit zusätzlichem Mantelmaterial in Form eines Überfangzylinders überfangen werden.

### Technische Aufgabenstellung

Beim thermischen Strecken des Vorprodukts wird dieses mit einem Ende beginnend und mit einer Vorschubgeschwindigkeit einer Heizeinrichtung zugeführt, darin bereichsweise erweicht, und aus dem erweichten Bereich wird eine Vorform oder eine Faser kontinuierlich und mit einer Abzugsgeschwindigkeit in Ziehrichtung abgezogen. Die Ziehrichtung kann jede Orientierung im Raum haben; üblicherweise verläuft sie in vertikaler oder in horizontaler Richtung. Dabei bildet sich eine Verformungszone, die auch als "Ziehzwiebel" bezeichnet wird.

Zur Einhaltung der Resonanz- beziehungsweise Antiresonanzbedingungen sind bereits geringe Maßabweichungen in der Größenordnung der Arbeitswellenlänge des zu führenden Lichts nicht tolerierbar. Daher stellt die maßgenaue Herstellung der komplexen Querschnittsstrukturen der Hohlkernfaser grundsätzlich eine hohe Herausforderung dar. Maßabweichungen können durch ungewollte Verformungen bei der Vorform-Herstellung auftreten. Zu nennen sind insbesondere Abweichungen der azimutalen Position der ARE-Vorformlinge beim thermischen Strecken eines Ensembles, bei dem die ARE-Vorformlinge noch mehr oder weniger beweglich und verformbar, insbesondere biegbar, in einem Hüllrohr angeordnet sind.

Ein Ziel der Erfindung ist es daher, ein Verfahren zur Herstellung einer Vorform für eine antiresonante Hohlkernfaser anzugeben, bei dem beim thermischen Strecken des Vorprodukts zur Vorform, insbesondere eines Vorprodukts in Form eines Ensembles, unbeabsichtigte Deformationen und Veränderungen der Querschnittsstruktur, insbesondere Positionsveränderungen von ARE-Vorformlingen vermieden werden, so dass im Ergebnis in der Vorform die Hohlkanäle der Querschnittsstruktur die vorgegebene azimutale Position möglichst exakt einnehmen.

### Zusammenfassung der Erfindung

Diese Aufgabe wird durch ein Verfahren mit den Merkmalen von Anspruch 1 gelöst. Vorteilhafte Ausgestaltungen des Verfahrens sind in den abhängigen Ansprüchen angegeben. Das Verfahren umfasst insbesondere die folgenden Verfahrensschritte:
(a) Bereitstellen eines ersten zylinderförmigen Vorprodukts VP1, das einen ersten Außendurchmesser OD1 aufweist.
   Das erste Vorprodukt liegt typischerweise als Ensemble aus Hüllrohr und ARE-Vorformlingen und gegebenenfalls einem Überfangzylinder vor, oder es liegt als Kernvorform vor, die aus einem solchen Ensemble durch thermisches Strecken erzeugt worden ist.
   Im Ensemble können die ARE-Vorformlinge an der Hüllrohr-Innenseite fixiert sein, und insbesondere können sie punktuell an den Hüllrohrenden an der Innenseite fixiert sein. Bei verschachtelten ARE-Vorformlingen, wie sie beispielsweise beim NANF, DNANF- oder ALIF-Design vorliegen, können die einzelnen Ausgangskomponenten, die den verschachtelten ARE-Vorformling bilden, punktuell miteinander verbunden sein, oder sie können als vorgefertigter ARE-Vorformling vorliegen, in dem einzelnen Ausgangskomponenten flächig miteinander verschmolzen sind und zusammen ein handhabbares, selbsttragendes Gebilde bilden.
(b) Das erste Vorprodukt VP1 mit dem Außendurchmesser OD1 wird durch zweimaliges thermisches Strecken zu der Vorform beziehungsweise zu einem dritten Vorprodukt weiterverarbeitet. Die Vorform beziehungsweise das dritte Vorprodukt haben den Ziel-Außendurchmesser OD3.
   Beim thermischen Strecken wird das Vorprodukt in der Heizzone von außen nach innen erhitzt. Dabei stellt sich innerhalb des Vorprodukts ein radialer Temperaturgradient von außen (heiß) nach innen (kalt) ein, der zu einer tropfenförmigen oder zwiebelförmigen Verformungszone führt, die auch als "Ziehzwiebel" bezeichnet wird. Die Umformung vom anfänglichen Außendurchmesser OD1 auf den Ziel-Außendurchmesser OD3 kann entlang einer vergleichsweise kurzen Strecke erfolgen. Dann würde die Ziehzwiebel in der Projektion gesehen (Schattenwurf) eine kleine Länge haben. Oder die Umformung vom Außendurchmesser OD1 auf OD3 kann entlang einer vergleichsweise langen Strecke erfolgen. Dann würde die Ziehzwiebel eine große Länge haben.
   Bei einer "langen Ziehzwiebel" sind die Materialtransportvorgänge für die Umformung langsamer und damit einhergehend "schonender" für die filigrane Querschnittsstruktur des inneren Mantelbereichs des Vorprodukts. Andererseits ist die filigrane Querschnittsstruktur dabei vergleichsweise lange den sehr hohen Ziehtemperaturen ausgesetzt, was auch zu unvorhersehbaren Verformungen führen kann.
   Die Erfindung geht daher weder den Weg über die kurze Ziehzwiebel noch den über den der langen Ziehzwiebel, um vom anfänglichen Außendurchmesser OD1 auf den Zieldurchmesser OD3 zu gelangen, sondern dafür wird ein Zwischenweg mit einem mindestens zweistufigen thermischen Streckvorgang vorgeschlagen.
   Dabei ist die erste Stufe dieses thermischen Streckvorgangs durch ein besonders kleines Ausziehverhältnis unterhalb von 1,3 charakterisiert. Dies führt einerseits dazu, dass die Materialtransportvorgänge für die Umformung langsamer und damit einhergehend "schonender" sind, und dass andererseits die Dauer kurz ist, in der die filigrane Querschnittsstruktur den hohen Ziehtemperaturen ausgesetzt sind. Dies hat insbesondere für die erste Stufe des thermischen Streckvorgangs eine besondere Bedeutung, wenn hier ARE-Vorformlinge nicht oder nicht vollständig in das erste Vorprodukt durch Schmelzverbund integriert sind und daher eine gewisse Eigenbeweglichkeit haben. Denn diese kann dazu führen, dass Längenabschnitte der ARE-Vorformlinge gerade bei starken Umformprozessen diesen nicht oder nur teilweise folgen, was letztlich über die Länge des Vorprodukts oder der Vorform gesehen eine Abweichung von der vorgegebenen Querschnittsstruktur verursacht. Geht die Abweichung von der vorgegebenen Querschnittsstruktur so weit, dass es zu Kontakten zwischen benachbarten ARE-Vorformlingen kommt, bedeutet das den Ausfall und Verlust des Vorprodukts beziehungsweise der Vorform.
   Somit wird in der ersten Stufe des mehrstufigen thermischen Streckvorgangs aus VP1 mit dem Außendurchmesser OD1 durch thermisches Strecken ein zweites Vorprodukt VP2 mit dem Außendurchmesser OD2 erzeugt, wobei der thermische Streckvorgang von VP1 zu VP2 durch ein kleines Ausziehverhältnis unterhalb von 1,4 und insbesondere unterhalb von 1,28 charakterisiert ist, und das besonders bevorzugt zwischen 1,002 und 1,25 liegt.
   Dadurch ist sichergestellt, dass im zweiten Vorprodukt VP2 eine stabile Querschnittsstruktur ohne unbeabsichtigte Deformationen und Veränderungen erhalten wird, in der insbesondere die vormaligen ARE-Vorformlinge durch Verschmelzung über ihre gesamte Länge vollständig integriert sind.
(c) Um den Ziel-Außendurchmesser OD3 zu erreichen, umfasst der mindestens zweistufige thermische Streckvorgang in der zweiten Stufe ein thermisches Strecken des zweiten Vorprodukts VP2 mit einem zweiten Ausziehverhältnis AV2 unter Bildung der Vorform oder eines dritten zylinderförmigen Vorprodukts VP3, das zu der Vorform weiterverarbeitet wird.
   Die Querschnittsstruktur in der zweiten Vorform ist in dem Sinne stabilisiert, dass sie ausschließlich durch Verschmelzung über ihre gesamte Länge vollständig integrierte ARE-Vorformlinge aufweist. Daher kann das zweite Ausziehverhältnis AV2, durch das der Ziel-Außendurchmesser OD3 eingestellt wird, beliebig groß sein, insbesondere kann es kleiner oder größer sein als AV1, ohne dass Deformationen und Veränderungen der Querschnittsstruktur zu befürchten sind. Aus Effizienzüberlegungen ist AV2 vorteilhafterweise größer als 1,2, vorzugsweise größer als 1,25 und besonders bevorzugt größer ist als 1,3 ,

Insbesondere im Hinblick auf einen möglichst schonenden Umformprozess in der ersten Stufe des thermischen Streckvorgangs ist eine Verfahrensweise vorteilhaft, bei der das Verhältnis der Ziehzwiebellänge Lz bezogen auf das Verhältnis der Außendurchmesser OD2 und OD1 einerseits groß ist und andererseits die Konizität oder Einschnürung der Ziehzwiebel möglichst gering ist. Ein Maß dafür ist der "mittlere Einschnürwinkel". Demnach wird beim thermischen Strecken des ersten Vorprodukts VP1 gemäß Verfahrensschritt (b) eine Ziehzwiebel mit einer Ziehzwiebellänge Lz gebildet, bei der der mittlere Einschnürwinkel ε weniger als 5 Grad, bevorzugt weniger als 4 Grad und besonders bevorzugt weniger als 3 Grad beträgt.

Vorzugsweise hat das erste Vorprodukt einen großen Außendurchmesser in dem Sinne, dass der erste Außendurchmesser OD1 im Bereich von 30 bis 230mm, bevorzugt im Bereich von 35 bis 160mm, besonders bevorzugt im Bereich von38 bis 120mm, liegt.

Demzufolge ist auch das durch geringfügiges thermisches Strecken aus dem ersten Vorprodukt erhaltene, zweite Vorprodukt ebenfalls noch vergleichsweise dickwandig in dem Sinne, dass der zweite Außendurchmesser OD2 bevorzugt im Bereich von 25 bis 200mm, vorzugsweise im Bereich von 35 bis 120mm, liegt.

Demgegenüber hat das durch thermisches Strecken aus dem zweiten Vorprodukt erhaltene, dritte Vorprodukt einen Außendurchmesser OD3, der vorzugsweise im Bereich von 5 bis 100mm, vorzugsweise im Bereich von 8 bis 60mm, liegt.

Bei einer besonders vorteilhaften Ausgestaltung des Verfahrens ist vorgesehen, dass das erste zylinderförmige Vorprodukt VP1 ein Ensemble ist, das ein Hüllrohr mit einer Hüllrohr-Längsachse und einer Wandungs-Innenseite sowie eine Vielzahl an der Wandungs-Innenseite angeordneter zylinderförmiger ARE-Vorformlinge umfasst.

Bei diesem Ensemble, das in der Literatur auch als "primäre Vorform" bezeichnet wird, sind die ARE-Vorformlinge bevorzugt nicht oder nur punktweise mit der Hüllrohr-Innenseite verbunden, beispielsweise an einem Hüllrohr-Ende oder an beiden Hüllrohr-Enden. Dadurch behalten die ARE-Vorformling beim thermischen Strecken eine gewisse Beweglichkeit. Die ARE-Vorformlinge liegen als einfache Rohre oder Kapillare vor oder es sind verschachtelte ARE-Vorformlinge, die sich aus mindestens zwei Strukturelementen zusammensetzen, die mindestens punktweise miteinander verbunden sein können.

Hierbei hat eine erste Ausführungsform des ersten Vorprodukts vorteilhafterweise einen Außendurchmesser von mindestens 35mm, beispielsweise einen Außendurchmesser in einem Bereich von 40 bis 90mm. Bei einer anderen Ausführungsform hat das erste Vorprodukt dabei vorteilhafterweise einen größeren Außendurchmesser als 90mm. Der größere Außendurchmesser ergibt sich beispielsweise dadurch, dass das erste zylinderförmige Vorprodukt VP1 ein Hüllrohr mit großer Wandstärke und großem Außendurchmesser umfasst.

Die Wandstärke des Hüllrohres liegt beispielsweise im Bereich von 20 bis 75 mm und der Außendurchmesser im Bereich von 60bis 200mm.

Im ersten Vorprodukt VP1 können ARE-Vorformlinge oder einzelne Ausgangskomponenten an ihrer Soll-Position einer benachbarten Wandung lose anliegen. Durch das thermische Strecken des ersten Vorprodukts VP1 werden alle ARE-Vorformlinge gestreckt und mit der jeweiligen Wandung verschmolzen. Im Hinblick darauf eine Verfahrensweise bevorzugt, bei der das zweite zylinderförmige Vorprodukt VP2 eine erste Kernvorform ist.

Die Kernvorform (engl.: cane) ist ein gefügter, massiver Hohlzylinder, der den Hohlkern und den von Hohlkanälen durchzogenen Mantel umfasst.

Das dritte zylinderförmige Vorprodukt VP3 ist vorteilhafterweise ebenfalls eine Kernvorform, also in dem Fall eine zweite Kernvorform, deren Außendurchmesser OD3 entsprechend dem zweiten Ausziehverhältnis AV2 kleiner ist als der Außendurchmesser OD2 der ersten Kernvorform.

Bei einer bevorzugten Verfahrensweise ist ein mindestens dreistufiger thermischer Streckvorgang vorgesehen, wobei die Weiterverarbeitung des dritten zylinderförmigen Vorprodukts VP3 ein thermisches Strecken des dritten Vorprodukts VP3 und ein gleichzeitiges Überfangen mit einem Überfangzylinder umfasst.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der übrigen Beschreibung Gesagte maßgeblich.

Für Begriffe und Messverfahren, die in der Beschreibung nicht speziell definiert sind, ist die Auslegung gemäß der Internationalen Fernmeldeunion (ITU; International Telecommunication Union) maßgeblich. Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum am nächsten vor dem der vorliegenden Anmeldung liegt. Sollten Messbedingungen nicht angegeben sein, so gelten als Standard-Bedingungen (SATP-Bedingungen) für die Temperatur 298,15 K (25°C, 77°F) und für den absoluten Druck 100 kPa (14,504 psi, 0.986 atm).

### Antiresonanzelemente

Antiresonanzelemente (kurz AREs) können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Vorform

Die Vorform ist dasjenige Bauteil oder Bauteil-Ensemble, aus dem die antiresonante Hohlkernfaser anhand eines Faserziehprozesses gezogen wird. Die Kern-Mantel-Querschnittsstruktur der Hohlkernfaser kann in der Vorform durch die relative Anordnung der ARE-Vorformlinge zueinander beziehungsweise der daraus erzeugten Hohlkanäle und deren Winkelverteilung bereits geometrisch angelegt sein. Häufig werden die Größenverhältnisse der Hohlkanäle beim Faserziehprozess aber noch verändert.

### Vorform -Vorprodukt - Ensemble - Kernvorform

Die Vorform wird durch einmaliges oder mehrmaliges thermisches Strecken eines Vorform-Vorprodukts erhalten. Das Vorform-Vorprodukt (kurz: Vorprodukt) ist beispielsweise ein mehr oder weniger loses Ensemble von zylinderförmigen Ausgangskomponenten (engl.: stack; hier auch als "Ensemble" oder als "primäre Vorform" bezeichnet) oder es ist ein gefügter, massiver Hohlzylinder, der den Hohlkern und mindestens den von Hohlkanälen durchzogenen Mantel umfasst (engl.: cane; hier auch als "Kernvorform" oder als "sekundäre Vorform" bezeichnet). Beim Ensemble können die zylinderförmigen Ausgangskomponenten und das Hüllrohr teilweise miteinander verschmolzen sein, insbesondere an den Hüllrohr-Enden. In der Kernvorform, die durch Kollabieren und/oder thermisches Strecken des Ensembles erhalten werden kann, sind die Ausgangskomponenten in der Regel über die gesamte Länge mit dem Hüllrohr verbunden.

Die Weiterverarbeitung des Vorform-Vorprodukts führt entweder zur Vorform oder zu einem weiteren Vorform-Vorprodukt und kann eine einmalige oder wiederholte Durchführung von einem oder mehreren der folgenden Heißformprozesse umfassen:
(i) Thermisches Strecken,
(ii) Kollabieren,
(iii) Kollabieren und gleichzeitiges thermisches Strecken,
(iv) Aufkollabieren von zusätzlichem Mantelmaterial,
(v) Aufkollabieren von zusätzlichem Mantelmaterial und anschließendes thermisches Strecken,
(vi) Aufkollabieren von zusätzlichem Mantelmaterial und gleichzeitiges thermisches Strecken.

### Antiresonanzelement-Vorformling

Als Antiresonanzelement-Vorformlinge werden zylinderförmige Ausgangskomponenten eines Vorform-Vorprodukts in Form eines Bauteil-Ensembles bezeichnet, die beispielsweise in einer Hüllrohr-Innenbohrung angeordnet sind. Sie werden im Wesentlichen durch thermisches Strecken zu Hohlkanälen in einem weiteren Vorprodukt oder zu der Vorform umgeformt, und sie bilden letztlich die Antiresonanzelemente in der Hohlkernfaser. Verschachtelte Antiresonanzelement-Vorformlinge bilden in der Hohlkernfaser verschachtelte Antiresonanzelemente. Sie setzen sich zusammen aus einem Primärrohr und mindestens einem weiteren Strukturelement, das in der Innenbohrung des Primärrohres angeordnet ist. Bei dem mindestens einen weiteren Strukturelement kann es sich um ein weiteres Rohr handeln, das an der Innenmantelfläche des Primärrohres anliegt. Das weitere Rohr wird hier als "Sekundärrohr" bezeichnet.

In der Innenbohrung des Sekundärrohres kann bei mehrfach verschachtelten Antiresonanzelement-Vorformlingen mindestens ein weiteres Strukturelement angeordnet sein, beispielsweise ein an der Innenmantelfläche des verschachtelten Sekundärrohres anliegendes, drittes Rohr, das hier als "Tertiärrohr" bezeichnet wird.

Ein vorkonfektionierter ARE-Vorformling ist ein selbsttragendes Gebilde, das ein Primärrohr und mindestens ein Sekundärrohr enthält, das mit der Primärrohr-Innenseite verbunden ist, so dass Primärrohr und Sekundärrohr in Form des Gebildes zusammen handhabbar sind.

### Thermisches Strecken / Kollabieren

Das Vorprodukt wird unter Bildung der Vorform thermisch gestreckt (elongiert). Die Streckung kann ohne gleichzeitiges Kollabieren erfolgen. Auch der Faserziehprozess beruht auf einem thermischen Streckvorgang. Der Faserziehprozess für Hohlkernfasern ist häufig kein Verhältniszug.

Beim Kollabieren wird eine Innenbohrung verengt oder Ringspalte zwischen rohrförmigen Bauteil werden geschlossen oder verengt. Das Kollabieren kann mit einem thermischen Strecken kombiniert werden.

### Ausziehverhältnis

Verhältnis der Bauteil-Außendurchmesser vor und nach dem thermischen Strecken.

### Ziehzwiebel

Eine Methode zur Ermittlung der Länge der Ziehzwiebel wird nachfolgend am Beispiel eines thermischen Streckvorgangs eines zylinderförmigen ersten Vorprodukts VP1 mit einem Außendurchmesser OD1 zu einem zylinderförmigen zweiten Vorprodukt VP2 mit einem Außendurchmesser OD2 in vertikaler Ziehrichtung erläutert.

Die Ziehzwiebel wird nach Abschluss des Streckvorgangs vermessen. Als "Anfang" der Ziehzwiebel wird dabei diejenige Höhenposition h1 definiert, an der für den ortsabhängigen Außendurchmesser Dz der Ziehzwiebel gilt: D_{Z1}=OD1-1/10×(OD1-OD2). Dementsprechend markiert das "Ende" der Ziehzwiebel diejenige Höhenposition h2, an der für den ortsabhängigen Außendurchmesser Dz der Verformungszone gilt: D_{Z2}=OD2+1/10×(OD1-OD2).

Die Länge der Ziehzwiebel Lz ergibt sich demnach als Abstand der Höhenpositionen: Lz=h1 (D_{Z1})-h2(D_{Z2}). Anhand der feststellbaren Länge L_{z} und den Abmessungen D_{z1} und D_{z2} kann für die Ziehzwiebel ein charakteristischer mittlerer Einschnürwinkel ε berechnet werden.

Diese Definitionen der Ziehzwiebel-Länge und des mittleren Einschnürwinkels sind nicht auf eine Ziehzwiebel beschränkt, wie sie sich beim thermischen Strecken bei vertikal orientierter Längsachse des ersten Vorprodukts VP1 ausbildet. Dementsprechend wird die Länge der Ziehzwiebel auch bei Streckvorgängen für weitere Vorprodukte und insbesondere auch bei horizontal orientierter Längsachse definiert.

### Querschnitt / Innenbohrung

Der Begriff "Querschnitt" in Verbindung mit langestreckten Komponenten wie ARE-Vorformlingen, Vorform oder Hohlkernfaser bezeichnet stets den Querschnitt senkrecht zur jeweiligen Längsachse, und zwar - sofern nichts anderes angegeben - bei rohrförmigen Komponenten den Querschnitt der Außenkontur (nicht: den Querschnitt der Innenkontur).

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: ein Diagramm zur Ermittlung von Geometriedaten einer Ziehzwiebel,
- **Figur 2**: Verfahrensschritte zur Herstellung einer Vorform für eine Hohlkernfaser anhand einer ersten Verfahrensweise,
- **Figur 3**: Verfahrensschritte zur Herstellung einer Vorform für eine Hohlkernfaser anhand einer zweiten Verfahrensweise,
- **Figur 4**: Verfahrensschritte zur Herstellung einer Vorform für eine Hohlkernfaser anhand einer dritten Verfahrensweise,
- **Figur 5a**: einen einfachen thermischen Streckvorgang zur Erzeugung eines Vorprodukts
- **Figur 5b**: einen Querschnitt des Vorprodukts nach dem einfachen thermischen Streckvorgang,
- **Figur 6a**: einen zweifachen thermischen Streckvorgang zur Erzeugung eines Vorprodukts, und
- **Figur 6b**: einen Querschnitt des Vorprodukts nach dem zweifachen thermischen Streckvorgang,

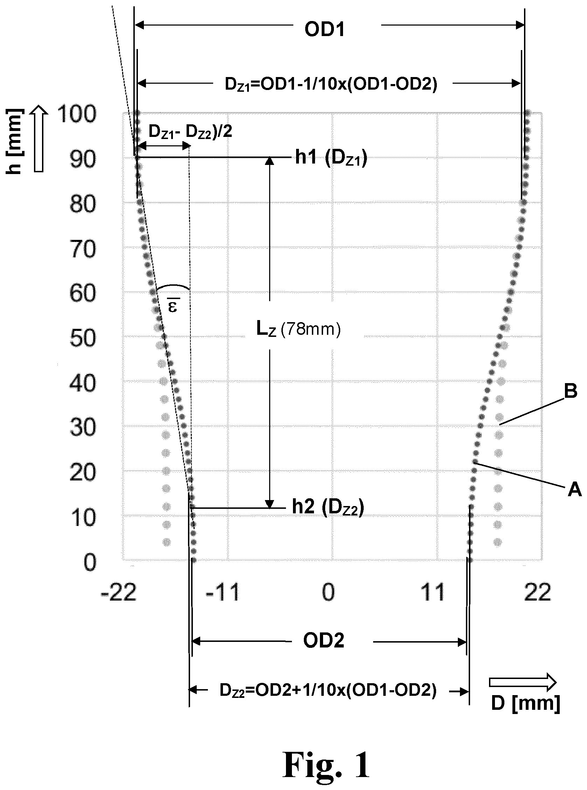

**Figur 1** zeigt schematisch zwei "breite" Ziehzwiebeln A, B mit vergleichsweise kleinem Einschnürwinkel, wie sie sich typischerweise in einem ersten thermischen Streckvorgang ausbilden, bei dem ein erstes Vorprodukt VP1 zu einem zweiten Vorprodukt VP2 elongiert wird. Im Diagramm ist auf der Y-Achse eine Höhen- oder Längeneinheit h (in mm) aufgetragen gegen den einen Vorprodukt-Durchmesser D (in mm).

Das erste Vorprodukt VP1 ist hier jeweils ein Bauteil-Ensemble mit einem Außendurchmesser von 41mm. Ziehzwiebel A gehört zu einem Streckvorgang, bei dem das zweite Vorprodukt VP2 (Probe 10 in Tabelle 1) eine Kernvorform mit einem Außendurchmesser von 28mm ist, und Ziehzwiebel B gehört zu einem Streckvorgang, bei dem das zweite Vorprodukt VP2 (Probe 8 in Tabelle 1) eine Kernvorform mit einem Außendurchmesser von 35mm ist. Für Ziehzwiebel A lässt sich am Diagramm anhand der in Definitionen genannten Methode eine Ziehzwiebellänge Lz von 78mm ablesen und daraus ein mittlerer Einschnürwinkel ε von 3,8 Grad berechnen. Für Ziehzwiebel B kann auf Basis einer abgelesenen Ziehzwiebellänge Lz von 78mm ein mittlerer Einschnürwinkel ε von 1,8 Grad berechnet werden.

### Herstellung eines ersten Vorprodukts - Verfahrensvariante 1

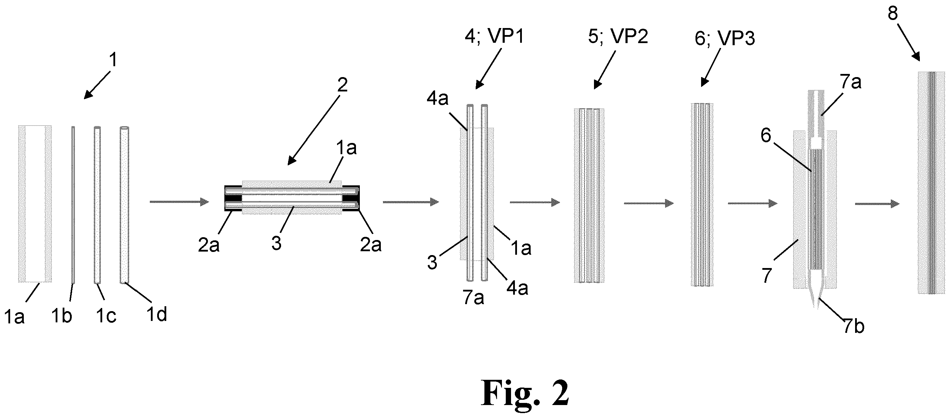

**Figur 2** zeigt schematisch Ausgangskomponenten 1 für die Herstellung einer Hohlkernfaser mit dem DNANF-Design. Dazu gehören ein Hüllrohr 1a, Tertiärrohre 1b, Sekundärrohre 1c und Primärrohre 1d. Das Hüllrohr 1a hat einen Außendurchmesser von 39mm und einen Innendurchmesser von 22,5mm.

Ein Tertiärrohr 1b, ein Sekundärrohr 1c und ein Primärrohr 1d werden jeweils zu einem ARE-Vorformling 3 zusammengefasst und an der Innenseite des Hüllrohres 1a montiert und zu einer Bauteil-Anordnung 2 unter Einsatz einer Ausrichtungsschablone 2a zusammengefasst.

Im Bereich der stirnseitigen Enden des Hüllrohres 1a werden die ARE-Vorformlinge 3 mittels Anschmelzpunkten 4a an der Hüllrohr-Innenseite punktuell angeschmolzen. Anschließend wird die Ausrichtungsschablone (2a) entfernt. Das so erzeugte mehr oder weniger noch lose Ensemble aus Hüllrohr 1a und ARE-Vorformlingen 3 hat einen Außendurchmesser OD1, der durch Außendurchmesser des Hüllrohres 1a bestimmt wird. Es wird einem mehrstufigen thermischen Streckvorgang unterzogen und bildet insoweit das erste Vorprodukt 4 (VP1) im Sinne der Erfindung (Probe 5 in Tabelle 1).

### Mehrstufiges thermisches Strecken - Verfahrensvariante 1

Das erste Vorprodukt 4 (VP1) wird durch ein erstes thermisches Strecken in ein zweites Vorprodukt 5 (VP2) und dieses durch ein zweites thermisches Strecken in ein drittes Vorprodukt 6 (VP3) elongiert.

Beim thermischen Strecken des ersten Vorprodukts 4 (VP1) wird ein kleines Ausziehverhältnis AV1 1,26 eingestellt. Dadurch laufen die Materialtransportvorgänge für die Umformung langsamer und damit einhergehend "schonender" ab. Außerdem kann die Vorschubgeschwindigkeit erhöht werden, so dass die Heizdauer, während der die ARE-Vorformlinge 3 besonders hohen Ziehtemperaturen ausgesetzt sind, vergleichsweise kurz ist. Die ARE-Vorformlinge 3 werden dabei wenig verformt und behalten weitgehend ihre vorgegebene Position und ihre strukturelle Integrität und sie werden mit der Innenseite des Hüllrohres 1a verschmolzen.

Die langsame und schonende Umformung des ersten Vorprodukts 4 zeigt sich darin, dass die Ziehzwiebel eine geringe Einschnürung hat, wie dies anhand von zwei anderen Ausführungsbeispielen in Figur 1 dargestellt ist. Dafür maßgebend sind Vorschubgeschwindigkeit, Heizzonenlänge und maximale Temperatur beim thermischen Strecken. Im Ausführungsbeispiel betragen die Vorschubgeschwindigkeit 20mm/min, die Heizzonenlänge 78mm und die maximale Temperatur 1880°C.

Somit wird in der ersten Stufe des mehrstufigen thermischen Streckvorgangs aus dem ersten Vorprodukt 4 (VP1) mit dem Außendurchmesser OD1 von 39mm durch thermisches Strecken das zweite Vorprodukt 5 (VP2) mit dem Außendurchmesser OD2 von 31mm erzeugt.

Das zweite Vorprodukt 5 (VP2) ist eine massive sogenannte Kernvorform, bei der der hohle Kernbereich von einem Mantelbereich umgeben ist, der von Hohlkanälen durchzogen ist.

In der zweiten Stufe des mehrstufigen thermischen Streckvorgangs wird aus dem zweiten Vorprodukt 5 (VP2) mit dem Außendurchmesser OD2 durch thermisches Strecken mit einem zweiten Ausziehverhältnis AV2 ein drittes zylinderförmiges Vorprodukt 7 (VP3) mit dem Außendurchmesser OD3 von 20mm. Das Ausziehverhältnis AV2 ist dabei mit 1,55 größer als AV1.

### Weiterverarbeitung zur Vorform - Verfahrensvariante 1

Das dritte Vorprodukt 6 (VP3) wird zu einer Vorform 8 weiterverarbeitet. Zu diesem Zweck wird es mit einem Überfangzylinder 7 überfangen, der zusätzliches Mantelmaterial bereitstellt, das genügt, um die vorgegebene Kern-Mantel-Querschnittsstruktur der Hohlkernfaser einzustellen. Beim Überfangen mit dem Überfangzylinder 7 mit vertikal orientierter Längsachse ist am oberen Ende des Vorprodukts 6 (VP3) ein Haltestab 7a angeschweißt und am unteren Ende einer Ziehspitze 7b. Durch gleichzeitiges Kollabieren und Elongieren wird die Vorform 8 erhalten. Daraus wird anhand eines üblichen Faserziehprozesses die Hohlkernfaser gezogen.

In Tabelle 1 sind Abmessungen und Verfahrensparameter des mehrstufigen thermisches Streckvorgangs für die oben detailliert beschriebene Probe 5 und für andere Proben zusammengefasst.

**Tabelle 1**

| **Nr.** | **OD1 [mm]** | **OD2 [mm]** | **AV1** | **Lz [mm]** | **ε Grad** | **geeignet** | **OD3 [mm]** | **AV2** | **Geeignet** |
|---|---|---|---|---|---|---|---|---|---|
| 1 | 30 | 27 | 1,11 | 78 | 0,9 | ja | 15 | 1,80 | ja |
| 2 | 30 | 25 | 1,20 | 78 | 1,5 | ja | 20 | 1,25 | ja |
| 3 | 34 | 30 | 1,13 | 78 | 1,2 | ja | 23 | 1,30 | ja |
| 4 | 34 | 27 | 1,26 | 78 | 2,1 | ja | 8 | 3,38 | ja |
| 5 | 39 | 31 | 1,26 | 78 | 2,4 | ja | 20 | 1,55 | ja |
| 6 | 41 | 38 | 1,08 | 78 | 0,9 | ja | 24 | 1,58 | ja |
| 7 | 41 | 38 | 1,08 | 78 | 0,9 | ja | 10 | 3,80 | ja |
| 8 | 41 | 35 | 1,17 | 78 | 1,8 | ja | 24 | 1,46 | ja |
| 9 | 41 | 29 | 1,41 | 82 | 3,4 | nein | | | |
| 10 | 41 | 28 | 1,46 | 78 | 3,8 | nein | | | |
| 11 | 41 | 24 | 1,71 | 90 | 4,3 | nein | | | |
| 12 | 56 | 50 | 1,12 | 78 | 1,8 | ja | 30 | 1,67 | ja |
| 13 | 56 | 48 | 1,17 | 78 | 2,4 | ja | | | |
| 14 | 90 | 80 | 1,13 | 78 | 2,9 | ja | 45 | 1,78 | ja |
| 15 | 90 | 45 | 2,00 | 100 | 10,4 | nein | | | |
| 16 | 110 | 90 | 1,22 | 140 | 3,3 | ja | 40 | 2,25 | ja |
| 17 | 110 | 40 | 2,75 | 140 | 11,5 | nein | | | |
| 18 | 140 | 120 | 1,17 | 140 | 3,3 | ja | 60 | 2,00 | ja |
| 19 | 200 | 180 | 1,11 | 150 | 3,3 | ja | 100 | 1,80 | ja |

Dabei bedeuten:

| | |
|---|---|
| OD1 | Außendurchmesser des ersten Vorprodukts |
| OD2 | Außendurchmesser des zweiten Vorprodukts |
| OD3 | Außendurchmesser eines dritten Vorprodukts oder einer Vorform |
| AV1 | Ausziehverhältnis im ersten thermischen Streckvorgang |

| | |
|---|---|
| AV2 | Ausziehverhältnis im zweiten thermischen Streckvorgang |
| Lz | Ziehzwiebel-Länge (empirisch ermittelt) |
| ε̅ | mittlerer Einschnürwinkel der Ziehzwiebel (rechnerisch ermittelt) |

"geeignet - nein": Maßhaltigkeit oder Querschnittsgeometrie des Vorprodukts sind nach dem thermischen Streckvorgang so, dass eine Weiterverarbeitung nicht sinnvoll ist.

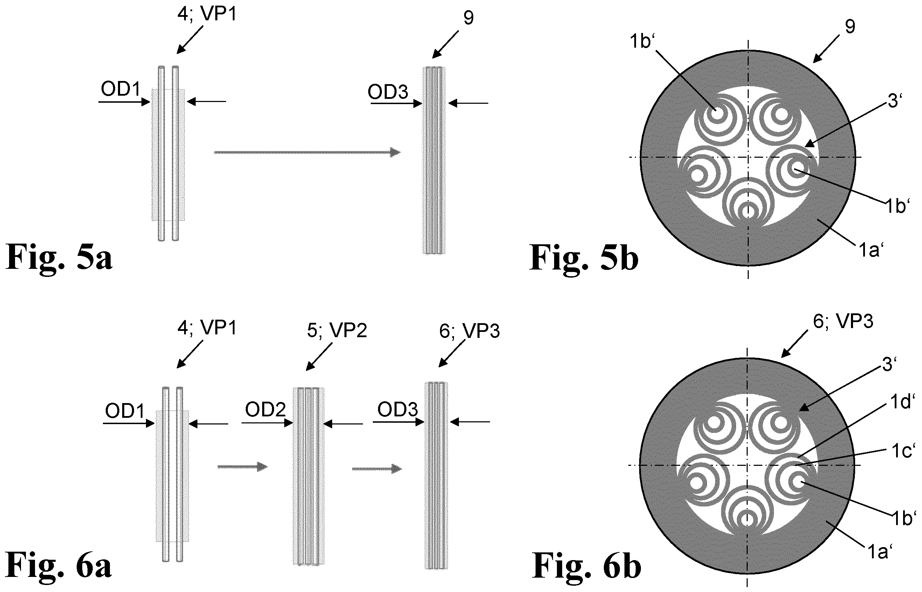

Die Proben 9, 10, 11, 15 und 17 sind Vergleichsbeispiele. Diese haben sich bereits nach dem ersten thermischen Strecken als nicht geeignet zur Weiterverarbeitung zur Vorform erwiesen, was auf das vergleichsweise große Ausziehverhältnis AV1 bei diesen Proben zurückgeführt wird. **Figur 5a** zeigt schematisch das einstufige thermische Strecken vom ersten Vorprodukt 4 (VP1) direkt zu einem zylinderförmigen Vorprodukt 9 mit dem Außendurchmesser OD3.

**Figur 5b** zeigt schematisch den Querschnitt des Vorprodukts 9 und den Grund für dessen Nicht-Eignung für die Weiterverarbeitung zur Vorform für die Hohlkernfaser. Denn innerhalb des vormaligen Hüllrohres 1a' sind die fünf vormaligen verschachtelten ARE-Vorformlinge 3' zwar gleichmäßig verteilt. Aber insbesondere einige der verschachtelten ehemaligen Tertiärrohre 1b' zeigen deutliche Abweichungen von ihrer Soll-Position.

Im Vergleich dazu zeigt **Figur 6a** schematisch ein zweistufiges thermisches Strecken des ersten Vorprodukts 4 (Probe 5 der Tabelle 1) mit dem Außendurchmesser OD1 zunächst mit einem kleinen Ausziehverhältnis zum zweiten Vorprodukt 5 (VP2) mit dem Außendurchmesser OD2 und erst dann mit einem höheren Ausziehverhältnis zum dritten Vorprodukt 6 (VP3) mit dem Außendurchmesser OD3. Wie **Figur 6b** anhand des Querschnitts dieses Vorprodukts 6 (VP3) zeigt, sind die fünf vormaligen verschachtelten ARE-Vorformlinge 3' innerhalb des vormaligen Hüllrohres 1a' gleichmäßig verteilt und mit der Hüllrohr-Innenseite verschmolzen. Und auch die verschachtelten ehemaligen Tertiärrohre 1b', Sekundärrohre 1c' und Primärrohre 1d' zeigen keine Abweichungen von ihrer Soll-Position. Daher ist das Vorprodukt 6 der Probe 5 für die Weiterverarbeitung zur Vorform geeignet.

Soweit bei den nachfolgend erläuterten Verfahrensvarianten 2 und 3 die gleichen Bezugsziffern verwendet werden wie in Figur 1, so bezeichnen diese identische oder äquivalente Bauteile, Bestandteile oder Verfahrensmaßnahmen wie sie oben anhand Verfahrensvariante 1 erläutert sind.

### Herstellung eines ersten Vorprodukts - Verfahrensvariante 2

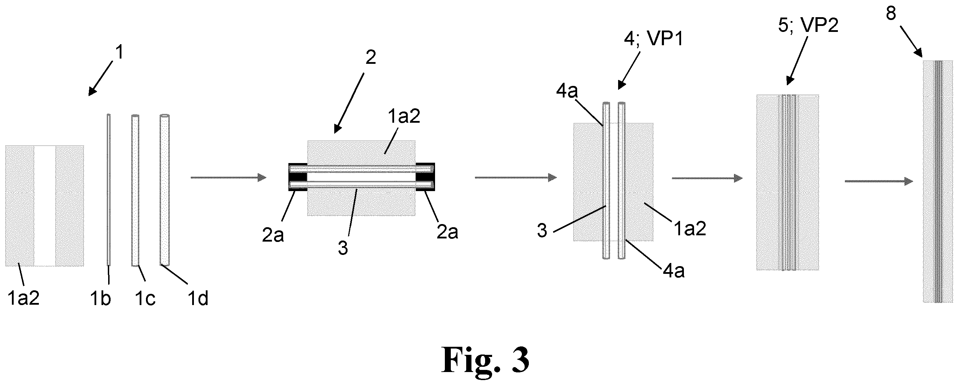

Im Unterschied zur Verfahrensvariante 1 umfassen die Ausgangskomponenten 1 bei der in **Figur 3** schematisch dargestellten Verfahrensvariante 2 ein besonders dickwandiges Hüllrohr 1a2 mit einem Außendurchmesser von 90mm und einem Innendurchmesser von 22,5mm (Probe 14 in Tabelle 1).

Das lose Ensemble 2 aus Hüllrohr 1a2 und ARE-Vorformlingen 3 hat einen Außendurchmesser OD1, der durch Außendurchmesser des Hüllrohres 1a2 bestimmt wird. Die ARE-Vorformlinge 3 werden an der Innenseite des Hüllrohres 1a2 angebondet. Das Ensemble 2 aus Hüllrohr 1a2 und angebondeten ARE-Vorformlingen 3 kann als erstes Vorprodukt 4 (VP1) im Sinne der Erfindung aufgefasst werden; es wird einem mehrstufigen thermischen Streckvorgang unterzogen.

### Mehrstufiges thermisches Strecken - Verfahrensvariante 2

Das erste Vorprodukt 4 (VP1) wird durch ein erstes thermisches Strecken in ein zweites Vorprodukt 5 (VP2) und dieses durch ein zweites thermisches Strecken zu einer Vorform 8 weiterverarbeitet.

Beim thermischen Strecken des ersten Vorprodukts 4 (VP1) wird ein kleines Ausziehverhältnis AV1 von 1,13 eingestellt. Die ARE-Vorformlinge 3 werden dabei nur wenig verformt und behalten weitgehend ihre vorgegebene Position und ihre strukturelle Integrität und sie werden mit der Innenseite des Hüllrohre 1a2 verschmolzen.

Somit wird in der ersten Stufe des mehrstufigen thermischen Streckvorgangs aus dem ersten Vorprodukt 4 (VP1) mit dem Außendurchmesser OD1 von 90mm durch thermisches Strecken das zweite Vorprodukt 5 (VP2) mit dem Außendurchmesser OD2 von 80mm erzeugt.

Das zweite Vorprodukt 5 (VP2) ist eine massive sogenannte Kernvorform, bei der der hohle Kernbereich von einem Mantelbereich umgeben ist, der von Hohlkanälen durchzogen ist.

In der zweiten Stufe des mehrstufigen thermischen Streckvorgangs wird aus dem zweiten Vorprodukt 5 (VP2) mit dem Außendurchmesser OD2 durch thermisches Strecken mit einem zweiten Ausziehverhältnis AV2 die Vorform 8 mit dem Außendurchmesser OD3.

### Weiterverarbeitung zur Vorform - Verfahrensvariante 2

Das zweite Vorprodukt 5 (VP2) wird durch thermisches Strecken zu einer Vorform 8 weiterverarbeitet, die die vorgegebene Kern-Mantel-Querschnittsstruktur der Hohlkernfaser hat. Daraus wird anhand eines üblichen Faserziehprozesses die Hohlkernfaser gezogen.

### Herstellung eines ersten Vorprodukts - Verfahrensvariante 3

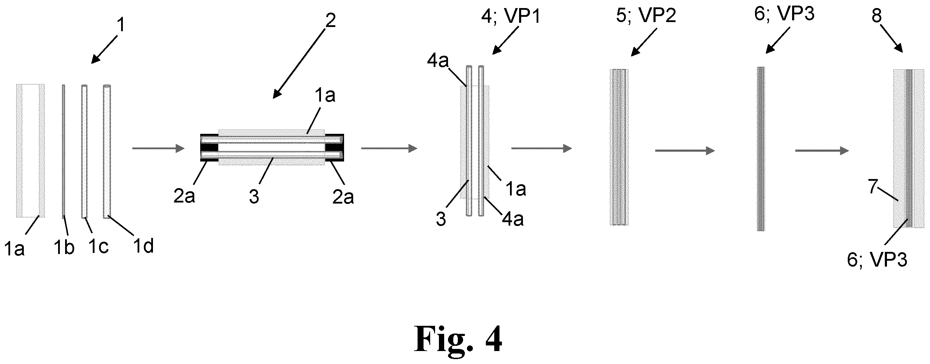

Bei der in **Figur 4** schematisch dargestellten Verfahrensvariante 3 sind die Verfahrensschritte bis zur Herstellung des zweiten Vorprodukts 5 (VP2) nahezu die gleichen wie bei Verfahrensvariante 1. Probe 7 der Tabelle 1 gibt die Abmessungen und Ausziehverhältnisse wieder. Im Vergleich zur Probe 5, wird das erste Vorprodukt thermisch mit einem noch kleineren Ausziehverhältnis von nur 1,08 zu einem zweiten Vorprodukt 5 (VP2) mit einem Außendurchmesser von 38mm gestreckt.

Die ARE-Vorformlinge 3 werden dabei wenig verformt und behalten weitgehend ihre vorgegebene Position und ihre strukturelle Integrität und sie werden mit der Innenseite des Hüllrohre 1a verschmolzen.

Das zweite Vorprodukt 5 (VP2) ist eine massive sogenannte Kernvorform, bei der der hohle Kernbereich von einem Mantelbereich umgeben ist, der von Hohlkanälen durchzogen ist.

### Mehrstufiges thermisches Strecken - Verfahrensvariante 3

Das zweite Vorprodukt 5 (VP2) wird anschließend in einem zweiten thermischen Streckvorgang zu einem besonders dünnen, dritten Vorprodukt 6 (VP3) mit einem Außendurchmesser von 10mm elongiert. Auch das dritte Vorprodukt 6 (VP3) ist eine massive Kernvorform.

### Weiterverarbeitung zur Vorform - Verfahrensvariante 3

Das dritte Vorprodukt 6 (VP3) wird zu einer Vorform 8 weiterverarbeitet, indem es mit einem Überfangzylinder 7 überfangen wird, so dass die vorgegebene Kern-Mantel-Querschnittsstruktur der Hohlkernfaser erhalten wird. Das Überfangen mit dem Überfangzylinder 7 erfolgt online im Faserziehprozess für die Hohlkernfaser.

## Patentansprüche

1. Verfahren zur Herstellung einer Vorform für eine antiresonante Hohlkernfaser, die einen sich entlang einer Faser-Längsachse erstreckenden Hohlkern und einen den Hohlkern umgebenden und von Hohlkanälen durchzogenen Mantel aufweist, umfassend die folgenden Verfahrensschritte:
(a) Bereitstellen eines ersten zylinderförmigen Vorprodukts VP1, das einen ersten Außendurchmesser OD1 aufweist,
(b) thermisches Strecken des ersten Vorprodukts VP1 mit einem ersten Ausziehverhältnis AV1 unter Bildung eines zweiten zylinderförmigen Vorprodukts VP2, das einen zweiten Außendurchmesser OD2 aufweist,
(c) thermisches Strecken des zweiten Vorprodukts VP2 mit einem zweiten Ausziehverhältnis AV2 unter Bildung der Vorform oder eines dritten zylinderförmigen Vorprodukts VP3, das zu der Vorform weiterverarbeitet wird, wobei die Vorform beziehungsweise das dritte Vorprodukt einen dritten Außendurchmesser OD3 aufweisen,
wobei das erste Ausziehverhältnis AV1 kleiner als 1,4 ist.

2. Verfahren nach Anspruch 1, **dadurch gekennzeichnet, dass** das zweite Ausziehverhältnis AV2 größer ist als 1,2, vorzugsweise größer als 1,25 und besonders bevorzugt größer ist als 1,3.

3. Verfahren nach Anspruch 1 oder 2, **dadurch gekennzeichnet, dass** das erste Ausziehverhältnis AV1 kleiner ist als 1,28 und insbesondere zwischen 1,002 und 1,25 liegt.

4. Verfahren nach einem oder mehreren der vorhergehenden Ansprüche, **dadurch gekennzeichnet, dass** beim thermischen Strecken des ersten Vorprodukts VP1 gemäß Verfahrensschritt (b) eine Ziehzwiebel mit einer Ziehzwiebellänge Lz und einem mittleren Einschnürwinkel ε gebildet wird, wobei der mittlere Einschnürwinkel ε weniger als 5 Grad, bevorzugt weniger als 4 Grad und besonders bevorzugt weniger als 3 Grad beträgt

5. Verfahren nach einem oder mehreren der vorhergehenden Ansprüche, **dadurch gekennzeichnet, dass** der erste Außendurchmesser OD1 im Bereich von 30 bis 230mm, vorzugsweise im Bereich von 35 bis 160mm, und besonders bevorzugt im Bereich von 38 bis 120mm liegt.

6. Verfahren nach einem oder mehreren der vorhergehenden Ansprüche, **dadurch gekennzeichnet, dass** der zweite Außendurchmesser OD2 im Bereich von 25 bis 200mm, vorzugsweise im Bereich von 35 bis 120mm, liegt.

7. Verfahren nach einem oder mehreren der vorhergehenden Ansprüche, **dadurch gekennzeichnet, dass** der dritte Außendurchmesser OD3 im Bereich von 5 bis 100mm, vorzugsweise im Bereich von 8 bis 60mm, liegt.

8. Verfahren nach einem oder mehreren der vorhergehenden Ansprüche, **dadurch gekennzeichnet, dass** das erste zylinderförmige Vorprodukt VP1 ein Ensemble ist, das ein Hüllrohr mit einer Hüllrohr-Längsachse und einer Wandungs-Innenseite sowie eine Vielzahl an der Wandungs-Innenseite angeordneter zylinderförmiger ARE-Vorformlinge umfasst.

9. Verfahren nach Anspruch 8, **dadurch gekennzeichnet, dass** das erste zylinderförmige Vorprodukt VP1 ein Hüllrohr mit großer Wandstärke im Bereich von 20 bis 75mm und großem Außendurchmesser im Bereich von 60 bis 200mm umfasst.

10. Verfahren nach Anspruch 8 oder 9, **dadurch gekennzeichnet, dass** die ARE-Vorformling an die Wandungs-Innenseite des Hüllrohres nicht oder nur punktuell angeschmolzen sind.

11. Verfahren nach einem oder mehreren der vorhergehenden Ansprüche, **dadurch gekennzeichnet, dass** das zweite zylinderförmige Vorprodukt VP2 eine erste Kernvorform ist.

12. Verfahren nach Anspruch 10, **dadurch gekennzeichnet, dass** das dritte zylinderförmige Vorprodukt VP3 eine zweite Kernvorform ist.

13. Verfahren nach einem oder mehreren der vorhergehenden Ansprüche, **dadurch gekennzeichnet, dass** die Weiterverarbeitung des dritten zylinderförmigen Vorprodukts VP3 ein thermisches Strecken des dritten Vorprodukts und ein gleichzeitiges Überfangen mit einem Überfangzylinder umfasst.
